# FASCICULE DE BREVET EUROPEEN

(11) **EP 1 972 244 B1**
(45) Date de publication et mention de la délivrance du brevet: **28.07.2010**
(21) Numéro de dépôt: 08356042.5
(22) Date de dépôt: 13.03.2008
(51) Int. Cl.: A47J 45/06

(54) **Dispositif de fixation de poignée sur un article culinaire avec capot anti projection**
Befestigungsvorrichtung eines Griffs auf einem Kochgerät mit Spritzschutzaufsatz
Device for attaching a handle to a culinary item with anti-splash cover

(30) Priorité: 21.03.2007 FR 0702042
(43) Date de publication de la demande: 24.09.2008
(73) Titulaire: SEB S.A., 69130 Ecully (FR)
(72) Inventeur: Cuillery, Pascal, 74210 Faverges (FR); Plichon, Stéphane, 74000 Annecy (FR); Brasset, Jean-François, 74000 Annecy (FR)
(74) Mandataire: Kiehl, Hubert

(56) Documents cités:
- DE-A1- 2 831 194
- DE-A1- 10 100 370

## Description

La présente invention concerne un dispositif de fixation d'une poignée sur un article culinaire tel qu'une casserole, une poêle, etc.

On connaît du document US 2787805 un dispositif de fixation d'une poignée sur une paroi latérale ou calotte d'un article culinaire du type comprenant un goujon moulé attenant à la paroi de l'article culinaire, de section carrée, comportant à son extrémité un orifice taraudé. L'extrémité de la poignée est apte à accoster la calotte de l'article culinaire et comporte un logement qui coopère avec la section carrée du goujon et assure le positionnement dans deux directions perpendiculaires à l'axe de la poignée, une horizontale et une verticale. Dans le prolongement du logement, la poignée comporte un passage et une zone d'appui pour une vis qui coopère avec l'orifice taraudé du goujon. Une embase faisant office de pare flamme est fixée sous l'extrémité de la poignée.

Avec ce dispositif de fixation, les projections de matière organique de la préparation réalisée dans l'article culinaire tombent sur la partie supérieure de la poignée qui est chaude car directement en contact avec la calotte de l'article culinaire, ces projections sèchent et deviennent fortement adhérentes et difficiles à nettoyer.

De plus, ce dispositif de fixation présente l'inconvénient de ne pas être durable car l'assemblage de la poignée sur la calotte de l'article culinaire prend rapidement du jeu. En effet, la matière de la poignée, directement en contact avec la calotte de l'article culinaire, est soumise aux cycles de chauffe et refroidissement et se dégrade au cours du temps.

Le document GB 1077475 décrit un autre exemple d'un dispositif de fixation d'une poignée sur une calotte d'un article culinaire du type comprenant un goujon apte à être fixé à la calotte de l'article culinaire par une première extrémité, ainsi qu'un réflecteur ou embase entourant l'extrémité de la poignée, apte à s'accoster contre la calotte de l'article culinaire par une première extrémité et à recevoir en butée contre sa deuxième extrémité un épaulement de la poignée. La deuxième extrémité du goujon comprend des moyens aptes à assurer la fixation axiale de la poignée, et comprend également des moyens aptes à assurer la mise en place de la poignée par emboîtement. En d'autres termes, l'épaulement de l'extrémité de la poignée délimite une protubérance sensiblement parallélépipédique, également appelée carré, qui présente en son centre un logement de réception du goujon.

Ce dispositif de fixation améliore les problèmes de vieillissement du dispositif cité précédemment.

Cependant, avec ce dispositif de fixation, les projections de matière organique de la préparation réalisée dans l'article culinaire tombent sur la partie supérieure de l'embase qui est très chaude car directement en contact avec la calotte de l'article culinaire et réalisée dans un matériau conducteur de chaleur. Ces projections sèchent voire carbonisent et deviennent difficiles à nettoyer.

Le document DE-A-10100372 décrit un dispositif selon le préambule de la revendication 1.

Le but de l'invention est de remédier aux inconvénients précités et de proposer un dispositif de fixation qui soit facile à nettoyer et qui assure une fixation sûre et durable.

Le but de la présente invention est de proposer un dispositif de fixation qui soit économique en minimisant le nombre de pièces mises en oeuvre.

Ces buts sont atteints avec un dispositif de fixation d'une poignée sur une calotte d'un article culinaire selon la revendication indépendante 1.

Selon l'invention, le dispositif de fixation permet d'avoir le bord supérieur de l'extrémité de la poignée qui s'approche au plus près de la calotte de l'article culinaire et faire ainsi que les projections de matière organique de la préparation réalisée dans l'article culinaire tombent de préférence sur la partie supérieure de la poignée. Cette partie supérieure de la poignée qui n'est pas en contact avec la calotte de l'article culinaire reste relativement froide.

Selon l'invention, l'extrémité de la poignée comporte un retour de matière sur la partie supérieure de l'embase.

Cette disposition permet d'éviter le contact entre le retour de matière de l'extrémité de la poignée et l'embase, ce qui fait que la température de ce retour de matière reste basse. De ce fait, les projections ne sont pas adhérentes et sont faciles à nettoyer. De plus, cette disposition permet d'utiliser un processus de fabrication de l'embase par filage d'aluminium puis tronçonnage ce qui est un processus très économique.

De préférence, la face du bord supérieur de l'extrémité de la poignée s'étend de part et d'autre d'un axe transversal vertical au maximum jusqu'à un axe transversal horizontal médian de la poignée.

Cette disposition permet de présenter aux projections une surface projetée de la partie supérieure de l'extrémité de la poignée maximale dans un plan formé par un axe longitudinal et un axe transversal horizontal de la poignée.

Avantageusement, la longueur de la face inférieure de l'embase est supérieure à vingt millimètres.

Cette disposition permet de réaliser une protection contre les flammes et les échauffements de la partie inférieure de l'extrémité de la poignée liés au mode de chauffe de l'article culinaire.

Avantageusement, la distance entre la face du bord supérieur de l'extrémité de la poignée et la calotte de l'article culinaire est de l'ordre d'un millimètre.

Cette disposition permet qu'aucune projection ne tombe sur l'embase lors de la cuisson et permet également que la température de la partie supérieure de l'extrémité de la poignée reste suffisamment basse.

Selon un autre mode de réalisation, la longueur de la face supérieure de l'embase est inférieure à cinq millimètres.

Cette disposition permet d'obtenir une face supérieure de l'embase minimale susceptible de recevoir des projections. En effet, l'embase en contact avec la calotte est très chaude et si les projections tombent sur l'embase, elles carbonisent et deviennent difficiles à nettoyer.

Avantageusement, la tranche supérieure de l'extrémité postérieure de l'embase est en appui contre la face du bord supérieur de la poignée.

L'invention sera mieux comprise à l'étude des modes de réalisation pris à titre nullement limitatif et illustrés dans les figures annexées dans lesquelles :
- La figure 1 est une vue éclatée en perspective d'un dispositif de fixation d'une poignée sur une calotte d'un article culinaire selon l'invention.
- La figure 2 illustre une vue en coupe du dispositif de la figure 1 suivant l'axe de la poignée.
- La figure 3 est une vue éclatée en perspective d'un dispositif de fixation d'une poignée sur une calotte d'un article culinaire selon un autre mode de réalisation de l'invention.
- La figure 4 illustre une vue en coupe du dispositif de la figure 3 suivant l'axe de la poignée.

Le dispositif de fixation 1 selon la présente invention permet de fixer une poignée 3 à une calotte 6 d'un article culinaire 2. Il est constitué d'un goujon 5, d'une embase 8 entourant une extrémité 30 de la poignée 3 et d'une vis 4.

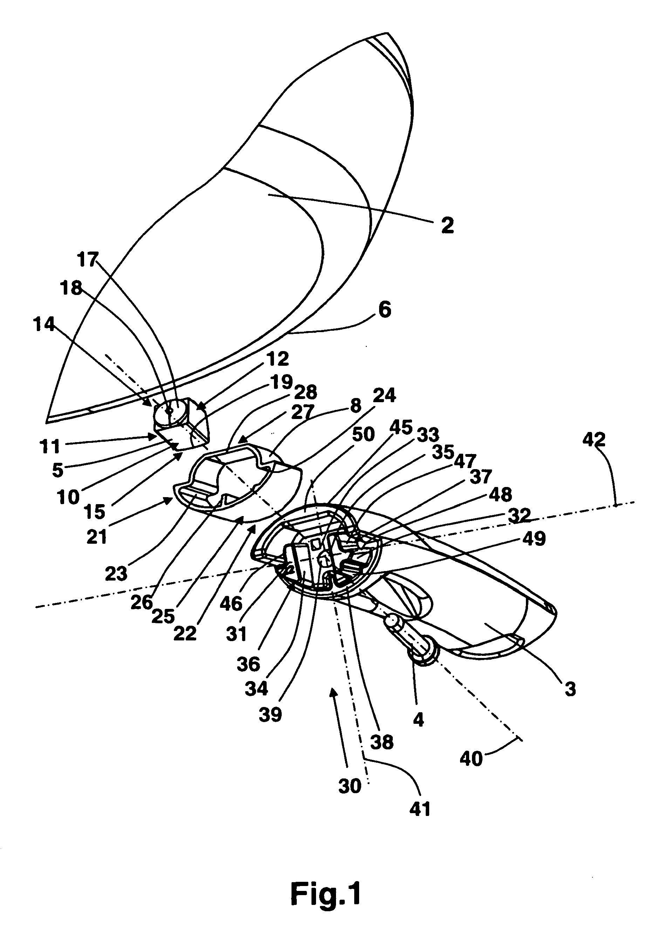

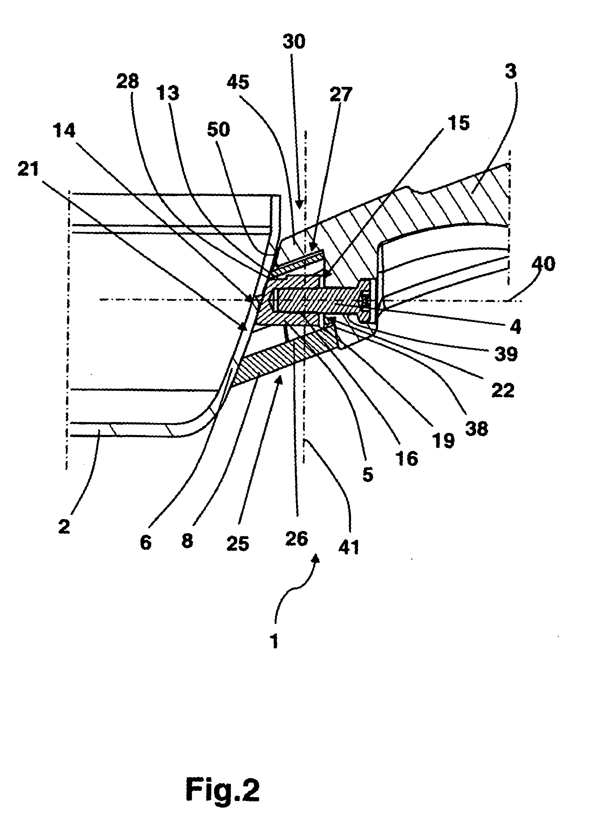

Tel que visible aux figures 1 et 2, le goujon 5 a la forme générale d'un prisme qui peut être de base carrée et d'axe longitudinal 40. Ledit goujon 5 comporte une première extrémité antérieure 14 adaptée à être fixée à la calotte 6 de l'article culinaire 2, ainsi qu'une deuxième extrémité postérieure 15 comprenant une ouverture aveugle 16 qui reçoit la vis 4. L'extrémité antérieure 14 du goujon 5 est conformée de façon à faciliter sa fixation par soudage à la calotte 6 de l'article culinaire 2 et comporte un disque bombé 17 muni d'une pointe 18 dirigée vers l'extérieur.

L'embase 8 a une forme générale d'un tube creux qui peut être à base sensiblement ovale. L'embase 8 possède une première extrémité antérieure 21 adaptée à accoster la calotte 6 de l'article culinaire 2 et une deuxième extrémité postérieure 22 apte à recevoir la poignée 3 en butée. Pour réaliser un accostage correct de l'extrémité antérieure 21 de l'embase 8 à la calotte 6 de l'article culinaire 2, la surface ou tranche définie par cette extrémité 21 et la zone de la calotte 6 à laquelle elle va s'accoster, sont sensiblement parallèles.

L'extrémité 30 de la poignée 3 comprend deux protubérances 31,32 faisant saillies, disposées de part et d'autre d'un axe transversal vertical 41, perpendiculaire à l'axe 40 de la poignée 3, et séparées par un espace formant un logement 33 apte à recevoir le goujon 5. Ledit logement 33 comporte deux faces planes constituées par deux parois internes 34,35 des deux protubérances 31,32, aptes à coopérer avec deux faces latérales 11,12 du goujon 5 ; ce qui permet d'immobiliser la poignée 3 sur le goujon 5 dans un axe transversal horizontal 42, perpendiculaire à l'axe 40 de la poignée 3 et par là même d'empêcher la rotation de la poignée 3 autour de son axe longitudinal 40.

L'extrémité 30 de la poignée 3 formée par les deux protubérances 31,32 est apte à s'emboîter dans l'embase 8. Les protubérances 31,32, comportant dans leurs parties externes, des surfaces 36,37 adaptées aux surfaces latérales internes 23,24 de l'embase 8. Les surfaces externes 36,37 comportent chacune une face de contact latéral 46,47 avec l'embase 8 de manière à positionner celle-ci par rapport à la poignée 3 dans l'axe transversal latéral 42. Les surfaces externes 36,37 des protubérances 31,32 comportent également deux faces de contact vertical 48,49 avec l'embase 8 de manière à positionner celle-ci par rapport à la poignée 3 dans l'axe transversal vertical 41.

Les surfaces externes 36,37 des deux protubérances 31,32 comportent une dépouille par rapport à l'axe longitudinal 40 de la poignée 3. En d'autres termes, on comprend que les protubérances 31,32 présentent une forme tronconique, c'est-à-dire que la section des protubérances devient plus petite côté extrémité antérieure de la poignée 3. Cette dépouille peut être variable entre la partie supérieure et inférieure des deux protubérances 31,32.

L'extrémité 30 de la poignée 3 est limitée par un épaulement 38, périphérique aux deux protubérances 31,32 qui est apte à venir en butée contre la tranche de l'extrémité postérieure 22 de l'embase 8, ce qui définit l'enfoncement maximal des protubérances 31,32 dans l'embase 8. L'arête supérieure de la tranche inférieure de l'extrémité postérieure 22 de l'embase 8 est en appui sur la face inférieure des protubérances 31,32.

L'embase 8 comporte, sur la face interne de sa partie inférieure 25, une nervure 26 qui prend appui sur une arête 19 située en partie inférieure de l'extrémité postérieure 15 du goujon 5 ou, dans un autre mode de réalisation, qui prend appui sur une ligne médiane de la face inférieure 10 du goujon 5.

Dans la tranche supérieure de son extrémité antérieure 21, l'embase 8 comprend une arête inférieure 28 qui prend appui sur une face supérieure 13 du goujon 5.

Un orifice 39 traversant est réalisé dans l'extrémité 30 de la poignée 3, dans le prolongement du logement 33. La vis 4 préalablement engagée dans l'orifice 39 est apte à coopérer avec l'ouverture aveugle 16 du goujon. L'orifice 39 comporte un épaulement contre lequel la tête de la vis est apte à venir en butée. La vis 4 peut être auto taraudeuse pour supprimer l'opération de taraudage de l'ouverture aveugle 16 du goujon et réduire le coût de fabrication du dispositif.

L'extrémité 30 de la poignée 3 comporte un retour de matière 45 qui coiffe la partie supérieure 27 de l'embase 8. La distance entre la face 50 du bord supérieur de l'extrémité 30 de la poignée 3 et la calotte 6 de l'article culinaire 2 est de l'ordre d'un millimètre. La face 50 du bord supérieur de l'extrémité 30 de la poignée 3 s'étend de part et d'autre de l'axe transversal vertical 41 au maximum jusqu'à l'axe transversal horizontal 42 médian de la poignée 3. Cette face 50 s'étend de préférence jusqu'au plan de joint de la poignée 3, définissant un retour de matière qui fait office de capot de protection de l'embase 8 vis-à-vis des projections et facilite le nettoyage.

La longueur de la face inférieure 25 de l'embase 8 est supérieure à vingt millimètres. Cette face inférieure 25 s'étend de part et d'autre de l'axe transversal vertical 41 jusqu'au plan de joint de la poignée et permet d'assurer une protection maximale contre les flammes de l'extrémité 30 de la poignée 3 et également du retour de matière 45.

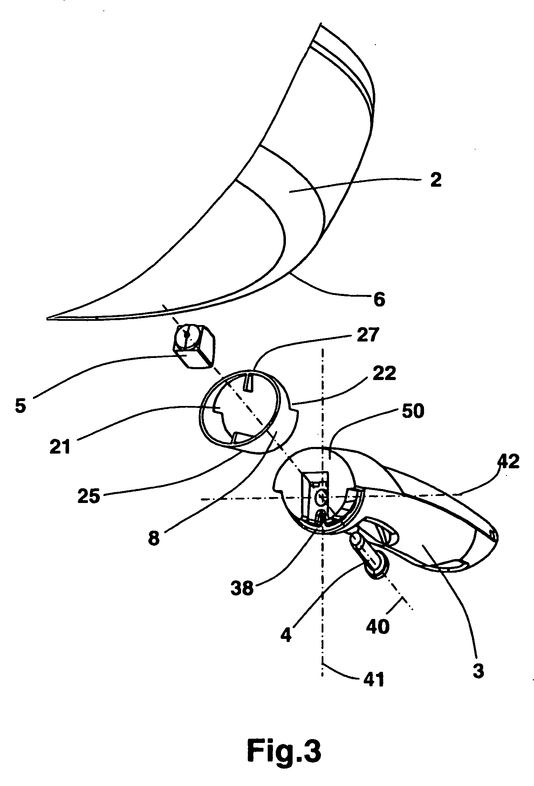

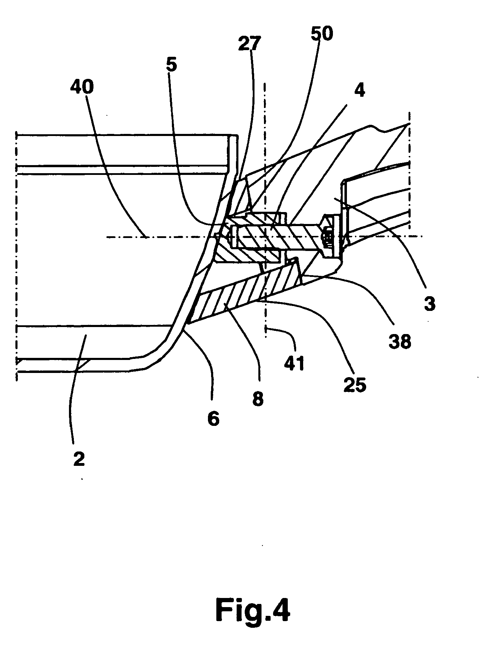

Les figures 3 et 4 illustrent un autre mode de réalisation de l'invention. Lors de l'utilisation de l'article culinaire 2, l'embase 8 au niveau mécanique, présente une partie inférieure en compression prise dans le couple antagoniste entre la liaison supérieure par vis 4 - poignée 3 - goujon 5 et la liaison inférieure calotte 6 - embase 8 - poignée 3. Notamment, cette zone comprimée est très sollicitée et sujette aux échauffements de la table de cuisson. La partie supérieure de l'embase 8 participe uniquement au positionnement sur le goujon grâce à sa partie antérieure, la partie supérieure postérieure étant mécaniquement de moindre importance.

On réalise donc une échancrure dans le bord supérieur postérieur de l'embase 8 et l'échancrure réalisée est comblée par un retour de matière de la poignée. La tranche postérieure 22 de l'embase 8 comporte deux parties : une partie inférieure qui est en appui contre l'épaulement 38 de l'extrémité de la poignée 3 et une partie supérieure qui est en appui contre la face 50 du bord supérieur de la poignée 3. Ce mode de réalisation permet une construction plus affinée de l'extrémité de la poignée 3 dans un axe transversal vertical 41 que dans le mode de réalisation précédent.

Pour fixer la poignée 3 à l'article culinaire 2 en utilisant le dispositif de fixation 1 selon l'invention, on fixe d'abord l'extrémité antérieure 14 du goujon 5 à la calotte 6 de l'article culinaire 2, par exemple par soudage.

On introduit les deux protubérances 31,32 de l'extrémité 30 de la poignée 3 dans l'extrémité postérieure 22 de l'embase 8. On positionne ensuite les faces planes 34,35 des deux protubérances 31,32 de la poignée 3 ainsi que l'embase 8 autour du goujon 5. On engage enfin la vis 4 dans l'orifice 39 de la poignée 3 et, comme l'orifice 39 et l'ouverture aveugle 16 du goujon 5 sont en regard l'un de l'autre, la vis 4 pénètre dans cette ouverture aveugle 16.

L'orifice 39 comporte un épaulement contre lequel la tête de vis 4 est apte à venir en butée. En poursuivant le vissage, la tranche de l'extrémité antérieure 21 de l'embase 8 va se trouver plaquée contre la calotte 6 de l'article culinaire et la tranche de l'extrémité postérieure 22 de l'embase 8 va se trouver plaquée contre l'épaulement 38 de la poignée 3. En fin de vissage, l'effort radial exercé par l'embase 8 sur la calotte inclinée de l'article culinaire 2 va induire que l'arête inférieure 28 de la tranche supérieure de l'extrémité antérieure 21 de l'embase 8 vienne en pression sur la face supérieure 13 du goujon 5.

La présente invention n'est nullement limitée à l'exemple de réalisation décrit et à ses variantes, mais englobe de nombreuses modifications dans le cadre des revendications.

## Revendications

1. Dispositif de fixation d'une poignée (3) sur une calotte (6) d'un article culinaire (2) comprenant un goujon (5) adapté à être fixé par sa première extrémité antérieure (14) à la calotte (6) de l'article culinaire (2) et comprenant une ouverture (16) à sa deuxième extrémité postérieure (15), une poignée (3) dont une extrémité (30) comporte au moins une protubérance (31,32) formant un logement (33) qui est adapté à recevoir le goujon (5) et qui est prolongé par un orifice (39) permettant le passage d'une vis (4) et son insertion dans l'ouverture (16) du goujon (5), une embase (8) qui est adaptée à entourer le goujon (5) et la protubérance (31,32) de la poignée (3) et qui relie, lorsque le dispositif de fixation est assemblé, longitudinalement la poignée (3) à la calotte (6) de l'article culinaire (2), **caractérisé en ce que** l'extrémité (30) de la poignée (3) comporte un bord supérieur présentant une face (50), **en ce que** la distance entre la face (50) du bord supérieur de l'extrémité (30) de la poignée (3) et la calotte (6) de l'article culinaire (2) est comprise entre cinq dixièmes de millimètres et six millimètres et **en ce que** l'extrémité (30) de la poignée (3) comporte un retour de matière (45) sur la partie supérieure (27) de l'embase (8).

2. Dispositif de fixation selon la revendication 1, **caractérisé en ce que** la face (50) du bord supérieur de l'extrémité (30) de la poignée (3) s'étend de part et d'autre d'un axe transversal vertical (41) au maximum jusqu'à un axe transversal horizontal (42) médian de la poignée (3).

3. Dispositif de fixation selon l'une des revendications 1 à 2, **caractérisé en ce que** la longueur de la face inférieure (25) de l'embase (8) est supérieure à vingt millimètres.

4. Dispositif de fixation selon l'une des revendications 1 à 3, **caractérisé en ce que** la distance entre la face (50) du bord supérieur de l'extrémité (30) de la poignée (3) et la calotte (6) de l'article culinaire (2) est de l'ordre d'un millimètre.

5. Dispositif de fixation selon l'une des revendications 1 à 3, **caractérisé en ce que** la longueur de la face supérieure (27) de l'embase (8) est inférieure à cinq millimètres.

6. Dispositif de fixation selon la revendication 5, **caractérisé en ce que** la tranche supérieure de l'extrémité postérieure (22) de l'embase (8) est en appui contre la face (50) du bord supérieur de la poignée (3).

## Claims

1. A device for fastening a handle (3) on to a pan (6) of a cooking utensil (2) comprising a stud (5) suitable for being fastened by the first anterior end thereof (14) to the pan (6) of the cooking utensil (2) and comprising an opening (16) at the second posterior end thereof (15), a handle (3) the end of which (30) comprises at least one protuberance (31,32) forming a housing (33) that is suitable for receiving the stud (5) and that is extended by an orifice (39) enabling a screw (4) to pass through and the insertion of same in the opening (16) of the stud (5), a collar (8) that is suitable for surrounding the stud (5) and the protuberance (31,32) of the handle (3) and that connects, when the fastening device is assembled, the handle (3) longitudinally to the pan (6) of the cooking utensil (2), **characterised in that** the end (30) of the handle (3) comprises a top edge having a face (50), **in that** the distance between the face (50) of the top edge of the end (30) of the handle (3) and the pan (6) of the cooking utensil (2) is between five-tenths of a millimetre and six millimetres and **in that** the end (30) of the handle (3) comprises a material return device (45) on the top portion (27) of the collar (8).

2. A fastening device according to claim 1, **characterised in that** the face (50) of the top edge of the end (30) of the handle (3) extends on either side of a vertical transverse axis (41) at most as far as a middle horizontal transverse axis (42) of the handle (3).

3. A fastening device according to any one of claims 1 to 2, **characterised in that** the length of the bottom face (25) of the collar (8) is greater than twenty millimetres.

4. A fastening device according to any one of claims 1 to 3, **characterised in that** the distance between the face (50) of the top edge (30) of the handle (3) and the pan (6) of the cooking utensil (2) is in the order of one millimetre.

5. A fastening device according to any one of claims 1 to 3, **characterised in that** the length of the top face (27) of the collar (8) is less than five millimetres.

6. A fastening device according to claim 5, **characterised in that** the top edge surface of the posterior end (22) of the collar (8) bears against the face (50) of the top edge of the handle (3).

## Patentansprüche

1. Vorrichtung zur Befestigung eines Griffes (3) am Topf (6) eines Kochartikels (2), umfassend einen Bolzen (5), der angepasst ist, um mit seinem ersten vorderen Ende (14) am Topf (6) des Kochartikels (2) befestigt zu werden, und der eine Öffnung (16) an seinem zweiten hinteren Ende (15) umfasst, einen Griff (3), von dem ein Ende (30) mindestens einen Vorsprung (31,32) umfasst, der eine Aufnahme (33) ausbildet, die angepasst ist, um den Bolzen (5) aufzunehmen, und die von einer Öffnung (39) verlängert wird, die den Durchgang einer Schraube (4) und deren Einfügung in die Öffnung (16) des Bolzens (5) ermöglicht, einen Unterteil (8), der angepasst ist, um den Bolzen (5) und den Vorsprung (31,32) des Griffes (3) zu umgeben, und der den Griff (3), wenn die Befestigungsvorrichtung zusammengebaut ist, mit dem Topf (6) des Kochartikels (2) der Länge nach verbindet, **dadurch gekennzeichnet, dass** das Ende (30) des Griffes (3) einen oberen Rand mit einer Seite (50) aufweist, und **dadurch**, dass der Abstand zwischen der Seite (50) des oberen Randes des Endes (30) des Griffes (3) und dem Topf (6) des Kochartikels (2) zwischen fünf zehntel Millimeter und sechs Millimeter beträgt, und **dadurch**, dass das Ende (30) des Griffes (3) eine Materialüberlappung (45) am oberen Teil (27) des Unterteils (8) aufweist.

2. Befestigungsvorrichtung nach Anspruch 1, **dadurch gekennzeichnet, dass** sich die Seite (50) des oberen Randes des Endes (30) des Griffes (3) auf beiden Seiten einer vertikalen Querachse (41) höchstens bis zu einer medianen, horizontalen Querachse (42) des Griffes (3) erstreckt.

3. Befestigungsvorrichtung nach einem der Ansprüche 1 bis 2, **dadurch gekennzeichnet, dass** die Länge der Unterseite (25) des Unterteils (8) mehr als zwanzig Millimeter beträgt.

4. Befestigungsvorrichtung nach einem der Ansprüche 1 bis 3, **dadurch gekennzeichnet, dass** der Abstand zwischen der Seite (50) des oberen Randes des Endes (30) des Griffes (3) und dem Topf (6) des Kochartikels (2) in der Größenordnung eines Millimeters liegt.

5. Befestigungsvorrichtung nach einem der Ansprüche 1 bis 3, **dadurch gekennzeichnet, dass** die Länge der Oberseite (27) des Unterteils (8) weniger als fünf Millimeter beträgt.

6. Befestigungsvorrichtung nach Anspruch 5, **dadurch gekennzeichnet, dass** der obere Abschnitt des hinteren Endes (22) des Unterteils (8) gegen die Seite (50) des oberen Randes des Griffes (3) drückt.
